# EUROPEAN PATENT APPLICATION

(11) **EP 2 822 316 A1**
(43) Date of publication of application: **07.01.2015**
(21) Application number: 13754420.1
(22) Date of filing: 28.02.2013
(51) Int. Cl.: H04W 24/02, H04W 24/08, H04W 24/10, H04W 88/02

(54) **MOBILE TERMINAL DEVICE, WIRELESS COMMUNICATION SYSTEM, COMMUNICATION METHOD IN MOBILE TERMINAL DEVICE, AND PROGRAM**

(30) Priority: 01.03.2012 JP 2012045835
(71) Applicant: NEC Corporation, Tokyo 108-8001 (JP)
(72) Inventor: RYUTEI, Toru, Tokyo 108-8001 (JP)
(74) Representative: Vossius & Partner
(86) International application number: PCT/JP2013/055377
(87) International publication number: WO 2013/129563

(57) **Abstract**

A mobile terminal apparatus comprises: a plurality of antennas that receive, respectively, radio waves transmitted from a plurality of base stations; a plurality of receiving sections that receive reception signals from the plurality of antennas in parallel to produce demodulated signals; and a controller that exercises control so that a report on information regarding the plurality of base stations is transmitted to an upper order station if signal levels of the reception signals in the receiving sections are not less than a preset threshold value, and so that announcement information is acquired from the demodulated signals in response to a request for information acquisition, the request being made by the upper order station based on the report. Time involved in processing neighbor cell information regarding a neighbor relation function can be reduced.

## Description

### TECHNICAL FIELD

### (Reference to Related Application)

The present application claims priority from Japanese Patent Application 2012-045835 (filed on March 1, 2012), the content of which is hereby incorporated in its entirety by reference into this present specification.

The present invention relates to a mobile terminal apparatus, a wireless communication system, a communication method for the mobile terminal apparatus and a program and, more particularly, to a technique for processing for a base station which is to enter into a neighbor relation with the mobile terminal apparatus.

### BACKGROUND

It has recently been recognized that the function of self-organization for a network which automatically optimizes itself (Self-Organizing Network or SON) is useful for efficient management of a wireless network system. For such function, an automatic neighbor relation (Automatic Neighbor Relation or ANR) function which decides on whether or not to add or remove a neighbor cell (base station) is used to accomplish network management.

Patent Literature 1 discloses a system and a method that will facilitate management of the automatic neighbor relation function in a wireless network. The system can include components and/or devices that ascertain whether or not to add or remove a neighbor relation based on the information associated with an operations/ management system. The operations/ management system dispatches add or remove reports to a base station, which base station sets the neighbor relation, inclusive of that between cells, and/or establishes, updates, and/or maintains a neighbor relation table.

### CITATION LIST

### PATENT LITERATURE

[Patent Literature 1]
JP Patent Kokai Publication No. JP2011-518531A

### SUMMARY

### TECHNICAL PROBLEM

It should be noted that the total contents of disclosure of the above quoted Patent Literature are to be incorporated and stated by reference in the present Application.

The following analysis is given by the present invention.

In the ANR function in SON, if a terminal finds out a base station (cell) with a signal reception level not lower than a preset value, the terminal performs operations to get the announcement information on its own. Thus, if a plurality of base stations, each having high reception signal intensity, has been found, the terminal has to measure the signal levels of the reception signals regarding the cells in question and get the announcement information in order. As a result, much time is taken in processing the information regarding the neighbor cells.

Therefore, it is an object of the present invention to provide a mobile terminal apparatus, a wireless communication system, and a communication method for the mobile terminal apparatus that reduce time in processing information regarding neighbor cells pertinent to an ANR function.

### SOLUTION TO PROBLEM

According to an aspect of the present invention, there is provided a mobile terminal apparatus. The mobile terminal apparatus comprises: a plurality of antennas that receive, respectively, radio waves transmitted from a plurality of base stations; a plurality of receiving sections that receive reception signals from the plurality of antennas in parallel to produce demodulated signals; and a controller that exercises control so that a report on information regarding the plurality of base stations is transmitted to an upper order station if signal levels of the reception signals in the receiving sections are not less than a preset threshold value, and so that announcement information is acquired from the demodulated signals in response to a request for information acquisition, the request being made by the upper order station based on the report.

According to another aspect of the present invention, there is provided a communication method for a mobile terminal apparatus including a plurality of antennas that receive, respectively, radio waves transmitted from a plurality of base stations. The communication method comprises: receiving reception signals from the plurality of antennas in parallel to produce demodulated signals; transmitting a report on information regarding the plurality of base stations to an upper order station if signal levels of the reception signals are not less than a preset threshold value; and acquiring announcement information from the demodulated signals in response to a request for information acquisition, the request being made by the upper order station based on the report.

According to yet another aspect of the present invention, there is provided a program. The program causies a computer, included in a mobile terminal apparatus comprising a plurality of antennas that receive, respectively, radio waves transmitted from a plurality of base stations, and a plurality of receiving sections that receive reception signals from the plurality of antennas in parallel to produce demodulated signals, to execute: deciding whether or not signal levels of the reception signals in the plurality of receiving sections are not less than a preset threshold value; transmitting a report on information regarding the plurality of base stations to an upper order station if the signal levels are not less than the preset threshold value; and acquiring announcement information from the demodulated signals in response to a request for information acquisition, the request being made by the upper order station based on the report.

### ADVANTAGEOUS EFFECTS OF INVENTION

According to the present invention, in which signal level measurements of the neighbor cells and reception of the announcement information are carried out for a plurality of cells in parallel, using a plurality of antennas, it becomes possible to reduce the processing time.

### BRIEF DESCRIPTION OF THE DRAWINGS

Fig. 1 is a block diagram showing an exemplary configuration of a wireless communication system according to a First Example of the present invention.
Fig.2 is a block diagram showing an exemplary configuration of a mobile terminal apparatus according to the First Example of the present invention.
Fig.3 is a diagram showing an exemplary operational sequence of the wireless communication system according to the First Example of the present invention.

### MODES FOR CARRYING OUT THE INVENTION

Preferred modes for carrying out the present invention will now be summarized. It is noted that symbols for reference to the drawings, added in the following description, are merely for assisting in the understanding and are not intended to limit the invention to the modes illustrated.

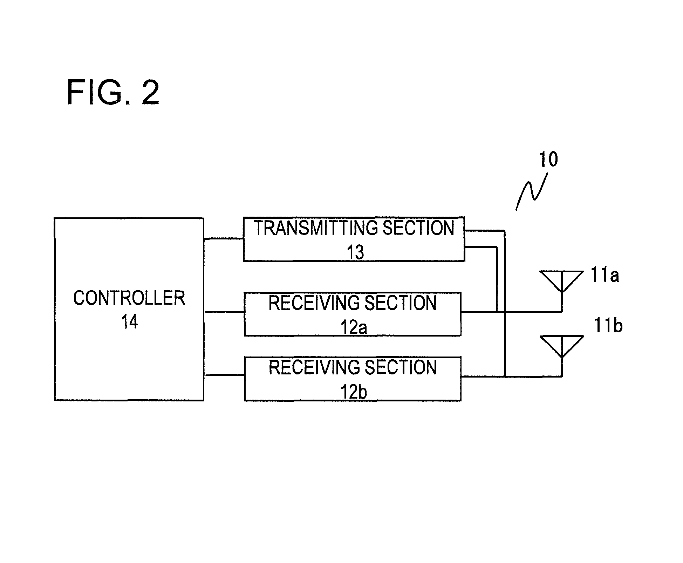

A mobile terminal apparatus according to an exemplary embodiment of the present invention comprises: a plurality of antennas (11a, 11b of Fig.2) that receive, respectively, radio waves transmitted from a plurality of base stations; a plurality of receiving sections (12a, 12b of Fig.2) that receive reception signals from the plurality of antennas in parallel to produce demodulated signals; and a controller (14 of Fig.2) that exercises control so that a report on information regarding the plurality of base stations is transmitted to an upper order station if signal levels of the reception signals in the receiving sections are not less than a preset threshold value, and so that announcement information is acquired from the demodulated signals in response to a request for information acquisition, the request being made by the upper order station based on the report.

In the mobile terminal apparatus, the information regarding the plurality of base stations may include identification information for the plurality of base stations.

In the mobile terminal apparatus, the information regarding the plurality of base stations may further include the signal levels of the reception signals regarding the plurality of base stations.

In the mobile terminal apparatus, the announcement information may include information as to whether or not part or all of the plurality of base stations is to be included in a neighbor relation.

The mobile terminal apparatus may further comprise a transmitting section (13 of Fig.2) that transmits to one of the plurality of antennas a transmission signal that reports the information regarding the plurality of base stations to the upper order station, wherein the one of the plurality of antennas may transmit a radio wave corresponding to the transmission signal to the upper order station.

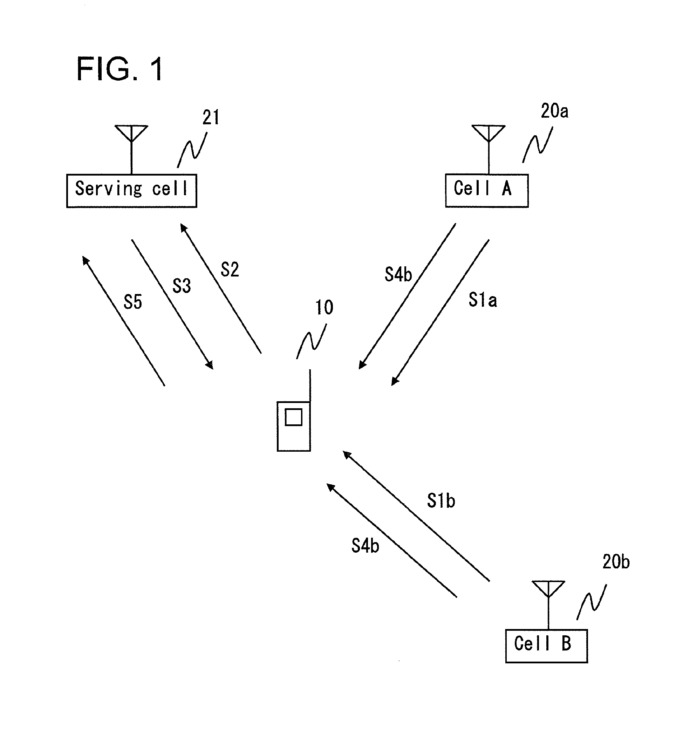

A wireless communication system may comprise the plurality of base stations (20a, 20b of Fig. 1), the upper order station (equivalent to 21 of Fig. 1) and the mobile terminal apparatus (10 of Fig. 1).

An Example of the present invention will now be detailed with reference to the drawings.

### (A First Example)

Fig. 1 depicts a block diagram showing an exemplary configuration of a wireless communication system according to a First Example of the present invention. Referring to Fig. 1, the wireless communication system comprises a mobile terminal apparatus 10 and base stations 20a, 20b, 21. As will be set out later, the mobile terminal apparatus 10 is equivalent to a mobile station. The apparatus is provided with a plurality of antennas, and transmits/receives radio waves between it and the base stations 20a, 20b, 21 to send out/receive desired information. The base stations 20a, 20b configure neighbor cells (cells A, B) with respect to the mobile terminal apparatus 10, with the base station 21 operating as an upper-order station with respect to the mobile terminal apparatus 10, viz., as a Serving Cell or an eNodeB (evolved Node B). The sequence of signal transmission between the mobile terminal apparatus 10 and the base stations 20a, 20b, 21 (steps S1a, S1b, S2, S3, S4a, S4b and S5) will be discussed later.

Fig.2 depicts a block diagram showing an exemplary configuration of a mobile terminal apparatus according to an Example of the present invention. In Fig.2, the mobile terminal apparatus 10 includes antennas 11a, 11b, receiving sections 12a, 12b, a transmitting section 13 and a controller 14. The receiving section 12a (12b) demodulates signals from the base stations 20a (20b), 21, received by the antenna 11a (11b), and outputs the resulting demodulated signals to the controller 14. The transmitting section 13 modulates the signal output from the controller 14 to transmit the resulting modulated signal via one of the antennas 11a, 11b to the base station 21.

The controller 14, implementing main functions of the mobile terminal apparatus 10, may be provided with a processor, a memory and an input/output circuit, and configured to come into operation by running a program stored in the memory. The following explanation is centered about the control in transmitting/ receiving the information regarding the ANR by the receiving sections 12a, 12b and the transmitting section 13 exchanging the information with the base stations 20a, 20b, 21. The explanation about any other functions, not having to do with the invention of the present Application, is dispensed with.

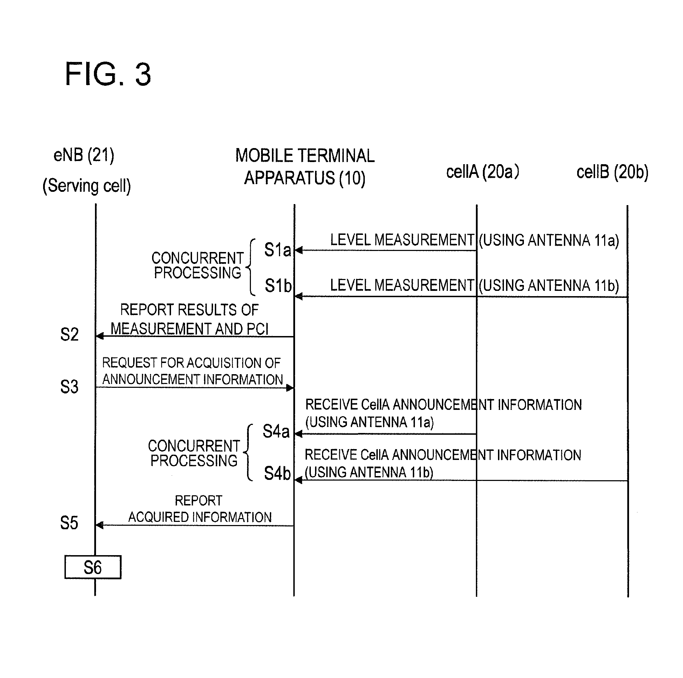

An example of an operation of the wireless communication system will now be explained. Fig.3 depicts an exemplary operational sequence of the wireless communication system according to an Example of the present invention, and shows the sequence of signal transmission between the mobile terminal apparatus 10 and the base stations 20a, 20b, 21 in Fig. 1, with the downward direction representing the direction of time lapse.

In steps S1a, S1b, the mobile terminal apparatus 10 performs parallel measurement of signal levels of signals received from the base stations 20a, 20b (cells A and B), in order to compare the reception signal levels to respective threshold values. In case both of the signal levels are equal to or greater than the preset threshold values, the mobile terminal apparatus executes the following steps in order.

In a step S2, the mobile terminal apparatus 10 notifies the base station 21 (eNB (serving cell)) about the reception levels and the PCI of the cells A, B. The PCI (Physical Cell Identity) is the identification information of the respective cells.

In a step S3, the base station 21 requests the mobile terminal apparatus 10 to acquire the information, which is necessary for receiving the announcement information, based on the identification information and the reception levels reported from the mobile terminal apparatus 10. The announcement information is the information regarding whether or not the cell in question is to be included in the neighbor relation. The information necessary for receiving the announcement information may be exemplified by a parameter for calculating the reception timing of the announcement information and the frequency information for the cell in question, in order to receive the announcement information. Based on the parameter, the mobile terminal apparatus 10 calculates at which timing in the received signal the announcement information is to be received, and receives the announcement information at the so calculated timing.

In steps S4a and S4b, the mobile terminal apparatus 10 receives the announcement information contained in each of data blocks, sent from the base stations 20a, 20b, in parallel, using the information notified at the step S3 by the base station 21. More specifically, taking 3GPP (Third Generation Partnership Project) as an example, an ECGI (E-UTRAN (Evolved Universal Terrestrial Radio Access Network) Cell Global Identity), a tracking area code and all PLMN (Public Land Mobile Network) IDs, all contained in SIB1 (System Information Block Type1), are acquired. It is noted that, in the SON operation, the information of SIB1 needs to be acquired. In this case, at the time of receiving the announcement information, the timing information necessary in receiving the SBI1 is contained in the MIB (Master Information Block). The SIB1 can thus be received after receiving the MIB and acquiring the timing information.

In a step S5, the mobile terminal apparatus 10 reports to the base station 21 the ECGI, the tracking area code and all PLMN IDs of each of the base stations 20a, 20b, as the acquired information.

In a step S6, the base station 21 determines whether or not to add one or both of the base stations 20a, 20b in the neighbor relation function, using the PCI, ECGI, tracking area code and all PLMN IDs as reported from the mobile terminal apparatus 10. The ensuing processing of the neighbor relation functions may be carried out using a technique well-known in the art and has no direct bearing with the present invention. Hence, the corresponding explanation here is dispensed with.

In the foregoing, such an example has been shown in which the mobile terminal apparatus 10 has the two antennas 11 a, 11b and the two receiving sections 12a, 12b to receive reception signals from the two base stations 20a, 20b. Of course, it is also possible that, if three or more of each of the antennas and the receiving sections are provided, the reception signals from three or more base stations can be received and processed in parallel at the same time.

In the system operating as described above, the mobile terminal apparatus 10 measures the signal levels of the neighbor cells and receives the announcement information at the same time in parallel, with the use of a plurality of antennas and a plurality of the receiving sections. It is thus possible to reduce processing time involved in the ANR functions.

In time to come, it may be anticipated that, with increase in the number of femto cells, such as CSGs (Closed Subscriber Groups), the number of cells detected will be increased. For such case, the mobile terminal apparatus of the present Example may be used to good effect for shortening the reception processing time.

The particular exemplary embodiments or examples may be changed or adjusted within the gamut of the entire disclosure of the present invention, inclusive of claims and drawings, based on the fundamental technical concept of the invention. Moreover, a variety of combinations or selection of elements herein disclosed (elements of claims, Examples and drawings) may be made within the concept of the claims of the present invention. Viz., it is to be noted that the present invention may include a variety of changes or corrections that may occur to those skilled in the art in accordance with the total disclosures inclusive of the claims and the technical concept of the invention.

### REFERENCE SIGNS LIST

- 10: mobile terminal apparatus
- 11a, 11b: antenna
- 12a, 12b: receiving section
- 13: transmitting section
- 14: controller
- 20a, 20b, 21: base station

## Claims

1. A mobile terminal apparatus, comprising:
a plurality of antennas that receive, respectively, radio waves transmitted from a plurality of base stations;
a plurality of receiving sections that receive reception signals from the plurality of antennas in parallel to produce demodulated signals; and
a controller that exercises control so that a report on information regarding the plurality of base stations is transmitted to an upper order station if signal levels of the reception signals in the receiving sections are not less than a preset threshold value, and so that announcement information is acquired from the demodulated signals in response to a request for information acquisition, the request being made by the upper order station based on the report.

2. The mobile terminal apparatus according to claim 1, wherein
the information regarding the plurality of base stations includes identification information for the plurality of base stations.

3. The mobile terminal apparatus according to claim 2, wherein
the information regarding the plurality of base stations further includes the signal levels of the reception signals of the plurality of base stations.

4. The mobile terminal apparatus according to claim 1, wherein
the announcement information includes information as to whether or not part or all of the plurality of base stations is to be included in a neighbor relation.

5. The mobile terminal apparatus according to any one of claims 1 to 3, comprising:
a transmitting section that transmits to one of the plurality of antennas a transmission signal that reports the information regarding the plurality of base stations to the upper order station, wherein
the one of the plurality of antennas transmits a radio wave corresponding to the transmission signal to the upper order station.

6. A wireless communication system, comprising:
the plurality of base stations;
the upper order station; and
the mobile terminal apparatus, according to any one of claims 1 to 5.

7. A communication method for a mobile terminal apparatus including a plurality of antennas that receive, respectively, radio waves transmitted from a plurality of base stations; the method comprising:
receiving reception signals from the plurality of antennas in parallel to produce demodulated signals;
transmitting a report on information regarding the plurality of base stations to an upper order station if signal levels of the reception signals are not less than a preset threshold value; and
acquiring announcement information from the demodulated signals in response to a request for information acquisition, the request being made by the upper order station based on the report.

8. A program, causing a computer, included in a mobile terminal apparatus comprising a plurality of antennas that receive, respectively, radio waves transmitted from a plurality of base stations, and a plurality of receiving sections that receive reception signals from the plurality of antennas in parallel to produce demodulated signals, to execute:
deciding whether or not signal levels of the reception signals in the plurality of receiving sections are not less than a preset threshold value;
transmitting a report on information regarding the plurality of base stations to an upper order station if the signal levels are not less than the preset threshold value; and
acquiring announcement information from the demodulated signals in response to a request for information acquisition, the request being made by the upper order station based on the report.
